# EUROPEAN PATENT APPLICATION

(11) **EP 4 635 781 A1**
(43) Date of publication of application: **22.10.2025**
(21) Application number: 24813741.6
(22) Date of filing: 05.02.2024
(51) Int. Cl.: B60L 50/62, B60W 10/06, B60W 10/08, B60W 20/13

(54) **TORQUE DISTRIBUTION METHOD AND APPARATUS, ELECTRONIC DEVICE AND STORAGE MEDIUM**

(30) Priority: 30.05.2023 CN 202310629894
(71) Applicant: Chongqing Changan Automobile Co., Ltd., Chongqing 400023 (CN)
(72) Inventor: LI, Bowen, Chongqing 400023 (CN); YE, Minghui, Chongqing 400023 (CN); YANG, Xunke, Chongqing 400023 (CN); ZHANG, Caigan, Chongqing 400023 (CN)
(74) Representative: Keller Schneider Patent- und Markenanwälte AG
(86) International application number: PCT/CN2024/075952
(87) International publication number: WO 2024/244535

(57) **Abstract**

Provided are a torque distribution method and apparatus, an electronic device and a storage medium. The method comprises: acquiring the current battery temperature of a high-voltage battery operating in a low-temperature environment and a driver demand torque (S101); determining target charging and discharging power of the high-voltage battery at the current battery temperature according to the current battery temperature and the battery charge capacity of the high-voltage battery (S102); determining, according to the target charging and discharging power and the actual power of a drive motor, generated power required by a range extender system (S103); and determining a target engine speed and a target engine torque of an engine and a target generator speed and a target generator torque of a generator according to the generated power and an optimal efficiency curve of the range extender system (S104). According to the method, the generated power can be adjusted along with the temperature, so that the battery does not need to work near the power limit for a long time, the safety of the high-voltage battery is improved, and the drivability can be improved. Moreover, the torque of the engine can be kept accurate in a low-temperature environment, thereby guaranteeing the accuracy of the charging power.

## Description

### TECHNICAL FIELD

The present application relates to the field of hybrid power system control, in particular to a torque distribution method and apparatus, an electronic device, and a storage medium.

### BACKGROUND

A series-parallel hybrid power system includes three power sources: an engine, a generator, and an electric motor, and its main hybrid driving mode mainly includes a series mode and a parallel mode, so as to ensure that a sum of three power source torques can meet the driver demand and the system efficiency can reach the optimal level.

The system efficiency is optimal and a torque transmitted to a wheel end meets the driving demand, which needs to coordinate the three power sources mentioned above to output an appropriate target torque or rotational speed in different modes. In a low-temperature scenario, a battery charging-discharging capacity is insufficient. When the driver demand changes rapidly, it is prone to encounter problems such as overcharging and overdischarging of a battery and poor drivability when calculating torque distribution according to a conventional energy management strategy. Therefore, in this scenario, torque and rotational speed outputs of the engine, the generator, and the electric motor need to be coordinated to ensure power balance in the power system, ultimately achieving the goal of ensuring the component service life, the driver demand, and the drivability.

In the related art, there is a drivability problem caused by not considering an electricity-generation power following solution at a low temperature, which makes it difficult to respond to the driver demand in a timely mode in an intense driving process; or a safety problem caused by not considering a charging power deviation due to an inaccurate engine torque at the low temperature, and the battery working near a power limit for a long time.

### SUMMARY OF THE INVENTION

The first objective of the present application is to provide a torque distribution method to solve at least one technical problem existing in the related art; the second objective is to provide a torque distribution apparatus; the third objective is to provide an electronic device; and the fourth objective is to provide a storage medium.

For achieving the above objectives, the technical solution adopted by the present application is as follows:
A torque distribution method includes:
acquiring a current battery temperature of a high-voltage battery running in a low-temperature environment and a driver demand torque;
determining a target charging-discharging power of the high-voltage battery at the current battery temperature according to the current battery temperature and a battery state of charge of the high-voltage battery;
determining an electricity-generation power needed by a range extending system according to the target charging-discharging power and an actual power of a driving motor, wherein the actual power of the driving motor is obtained based on the driver demand torque; and
determining an engine target rotational speed and an engine target torque for an engine, as well as a generator target rotational speed and a generator target torque for a generator according to the electricity-generation power and an optimal efficiency curve of the range extending system.

According to the above technical means, since the target charging-discharging power is obtained according to the battery state of charge of the high-voltage battery and the current battery temperature, the impact on the battery charging-discharging power at the low-temperature environment may be effectively considered, the electricity-generation power needed by the range extending system is determined according to the target charging-discharging power and the actual power of the driving motor, so that the electricity-generation power can also be adjusted follow the temperature, and the battery does not need to work near the power limit for a long time, thereby effectively improving the safety of the high-voltage battery; in addition, the actual power of the driving motor is obtained based on the driver demand torque, thus, the electricity-generation power may be obtained after responding to the driver demand, thereby improving the drivability; and finally, the above technical means further determine the engine target rotational speed and the engine target torque for the engine, as well as the generator target rotational speed and the generator target torque for the generator according to the electricity-generation power and the optimal efficiency curve of the range extending system, therefore, even in the low-temperature environment, the engine torque can also be remained accurate, thereby further ensuring the accuracy of a charging power.

Optionally, as described in the aforementioned torque distribution method, the step of determining the target charging-discharging power of the high-voltage battery according to the current battery temperature and the battery state of charge of the high-voltage battery includes:
acquiring calibration information of the high-voltage battery, wherein the calibration information is used to indicate a correspondence relationship between a combination of battery temperature and battery state of charge in relation to battery charging-discharging power; and
determining the target charging-discharging power according to the calibration information, the current battery temperature, and the battery state of charge of the high-voltage battery.

According to the above technical means, by acquiring the calibration information of the high-voltage battery and then determining the target charging-discharging power, the efficiency of determining the target charging-discharging power can be effectively improved.

Optionally, as described in the aforementioned torque distribution method, the step of determining the target charging-discharging power according to the calibration information, the current battery temperature, and the battery state of charge of the high-voltage battery includes:
matching an original target charging-discharging power from the calibration information according to the current battery temperature and the battery state of charge of the high-voltage battery;
determining an actual power of the high-voltage battery according to an actual voltage and an actual current of the high-voltage battery;
performing first closed-loop control on the original target charging-discharging power based on a power deviation between the actual power and the original target charging-discharging power, so as to obtain the target charging-discharging power and determine a target voltage and a target current of the high-voltage battery therefrom; and
performing filtering processing on the target voltage and the target current.

According to the above technical means, by performing the first closed-loop control on the original target charging-discharging power based on the power deviation between the actual power and the original target charging-discharging power, so as to obtain the target charging-discharging power, stability and reliability of the charging and discharging of the high-voltage battery can be effectively ensured, and by performing the filtering processing on the target voltage and the target current, the stability of a power system powered by the high-voltage battery can further be ensured.

Optionally, as described in the aforementioned torque distribution method, performing the first closed-loop control on the target charging-discharging power based on the power deviation between the actual power and the target charging-discharging power, so as to obtain the target charging-discharging power includes:
increasing the original target charging-discharging power to obtain the target charging-discharging power if the power deviation indicates that the original target charging-discharging power is less than the actual power;
taking the original target charging-discharging power as the target charging-discharging power if the power deviation indicates that the original target charging-discharging power is equal to the actual power; and
decreasing the original target charging-discharging power to obtain the target charging-discharging power if the power deviation indicates that the original target charging-discharging power is greater than the actual power.

According to the above technical means, the original target charging-discharging power can be adjusted in different situations to obtain the target charging-discharging power that is closest to the actual power.

Optionally, as described in the aforementioned torque distribution method, the step of determining the engine target rotational speed and the engine target torque for the engine, as well as the generator target rotational speed and the generator target torque for the generator according to the electricity-generation power and the optimal efficiency curve of the range extending system includes:
determining an engine original target rotational speed and an engine original target torque of the engine, as well as a generator original target rotational speed and a generator original target torque of the generator according to the electricity-generation power and the optimal efficiency curve of the range extending system;
when the engine runs according to the electricity-generation power, performing second closed-loop control on the engine original target torque based on a deviation between an engine actual rotational speed and the engine original target rotational speed of the engine, so as to obtain the engine target torque; and
obtaining the engine target rotational speed, the generator target rotational speed, and the generator target torque based on the engine target torque.

According to the above technical means, the impact of system fluctuation information, energy transfer efficiency and system error information on the electricity-generation power can be considered, the accuracy of the engine torque can be effectively improved, and then a charging power deviation caused by an inaccurate engine torque can further be avoided.

Optionally, as described in the aforementioned torque distribution method, when the engine runs according to the electricity-generation power, performing the second closed-loop control on the engine original target torque based on the deviation between the engine actual rotational speed and the engine original target rotational speed of the engine, so as to obtain the engine target torque includes:
increasing the engine original target rotational speed so as to obtain the engine target torque if the engine original target rotational speed is indicated to be less than the engine actual rotational speed;
taking the engine original target rotational speed as the engine target torque if the engine original target rotational speed is indicated to be equal to the engine actual rotational speed; and
decreasing the engine original target rotational speed so as to obtain the engine target torque if the engine original target rotational speed is indicated to be greater than the engine actual rotational speed.

According to the above technical means, the engine original target rotational speed can be adjusted in different situations to obtain the engine target rotational speed that best meets the target electricity-generation power.

Optionally, as described in the aforementioned torque distribution method, the step of determining the electricity-generation power needed by the range extending system according to the target charging-discharging power and the actual power of the driving motor includes:
determining a high-voltage accessory consumed power of a vehicle where the high-voltage battery is located;
determining the actual power of the driving motor in the vehicle; and
determining the electricity-generation power based on a sum of the target charging-discharging power, the high-voltage accessory consumed power, and the actual power.

According to the above technical means, by determining the electricity-generation power based on the sum of the target charging-discharging power, the high-voltage accessory consumed power, and the actual power, the safety of the high-voltage battery and the stability of the system can further be ensured.

Optionally, as described in the aforementioned torque distribution method, before the step of acquiring the current battery temperature of the high-voltage battery running in a low-temperature environment and the driver demand torque, the method further includes:
determining that the high-voltage battery is running in a low-temperature environment if a current environment temperature is lower than or equal to a lower temperature limit indicated by battery information of the high-voltage battery, and executing a jumping operation for jumping to the step of acquiring the current battery temperature of the high-voltage battery running in the low-temperature environment and the driver demand torque.

According to the above technical means, whether the high-voltage battery runs in the low-temperature environment can be judged timely and accurately, then the high-voltage battery may enter into a low-temperature running mode timely, and continuous running of the engine and the high-voltage battery in this mode is ensured.

Optionally, as described in the aforementioned torque distribution method, the step of determining the actual power of the driving motor in the vehicle includes:
assigning a value of the driver demand torque to a driving torque demand of the driving motor;
sending the driving torque demand to a dual-motor controller; and
controlling the driving motor by the dual-motor controller and determining the actual power of the driving motor.

According to the above technical means, the dual-motor controller can be controlled according to the driver demand torque, so as to respond to the driver demand timely.

According to another aspect of the present application, a torque distribution apparatus is further provided, including:
an acquiring module, configured to acquire a current battery temperature of a high-voltage battery running in a low-temperature environment and a driver demand torque;
a first determining module, configured to determine a target charging-discharging power of the high-voltage battery at the current battery temperature according to the current battery temperature and a battery state of charge of the high-voltage battery;
a second determining module, configured to determine an electricity-generation power needed by a range extending system according to the target charging-discharging power and an actual power of a driving motor, wherein the actual power of the driving motor is obtained based on the driver demand torque; and
a third determining module, configured to determine an engine target rotational speed and an engine target torque for an engine, as well as a generator target rotational speed and a generator target torque for a generator according to the electricity-generation power and an optimal efficiency curve of the range extending system.

According to another aspect of the present application, an electronic device is further provided, including a processor, a communication interface, a memory and a communication bus, wherein the processor, the communication interface and the memory carry out mutual communication through the communication bus.

The memory is configured to store a computer program; and
the processor is configured to execute the computer program stored on the memory to perform the steps of the method as any described previously.

According to another aspect of the present application, a computer readable storage medium is further provided, having a computer program stored thereon, wherein the computer program is configured to, when executed, perform the steps of the method as any described previously.

### Beneficial effects of the present application:

(1) Since the target charging-discharging power in the present application is obtained according to the battery state of charge of the high-voltage battery and the current battery temperature, the impact on the battery charging-discharging power at the low-temperature environment may be effectively considered, the electricity-generation power needed by the range extending system is determined according to the target charging-discharging power and the actual power of the driving motor, so that the electricity-generation power can also be adjusted follow the temperature, and the battery does not need to work near the power limit for a long time, thereby effectively improving the safety of the high-voltage battery.
(2) The actual power of the driving motor in the present application is obtained based on the driver demand torque, thus, the electricity-generation power may be obtained after responding to the driver demand, thereby improving the drivability.
(3) The present application further determines the engine target rotational speed and the engine target torque for the engine, as well as the generator target rotational speed and the generator target torque for the generator according to the electricity-generation power and the optimal efficiency curve of the range extending system, therefore, even in the low-temperature environment, the engine torque can also be remained accurate, thereby further ensuring the accuracy of a charging power.

### BRIEF DESCRIPTION OF THE DRAWINGS

Fig. 1 is a schematic flow diagram of a torque distribution method in an embodiment of the present application.
Fig. 2 is a schematic diagram of a series-parallel hybrid power system in an embodiment of the present application.
Fig. 3 is a schematic flow diagram of a torque distribution method in another embodiment of the present application.
Fig. 4 is a schematic flow diagram of a torque distribution method in another embodiment of the present application.
Fig. 5 is a schematic diagram of closed-loop control of a target charging-discharging power of a battery in an embodiment of the present application.
Fig. 6 is a schematic flow diagram of a torque distribution method in another embodiment of the present application.
Fig. 7 is a schematic diagram of closed-loop control of an engine target torque in an embodiment of the present application.
Fig. 8 is a schematic flow diagram of a torque distribution method in an embodiment of the present application.
Fig. 9 is a schematic flow diagram of a closed-loop control method applied to a torque distribution method in an application embodiment of the present application.
Fig. 10 is a schematic flow diagram of a torque distribution method in an application embodiment of the present application.
Fig. 11 is a structural block diagram of an optional torque distribution apparatus according to an embodiment of the present application.
Fig. 12 is a structural block diagram of an optional electronic device according to an embodiment of the present application.

### DETAILED DESCRIPTION

In order to make those skilled in the art understand the solutions of the present application better, the technical solutions in the embodiments of the present application will be described below clearly and completely with reference to accompanying drawings in the embodiments of the present application. Apparently, the described embodiments are only part of the embodiments of the present application, but not all the embodiments. On the basis of the embodiments in the present application, all other embodiments obtained by those ordinarily skilled in the art without inventive efforts should fall within the protection scope of the present application.

It should be noted that terms "first", "second", and the like in the specification and the claim of the present application and the above accompanying drawings are used to distinguish similar objects, and are not necessarily used to describe a specific sequence or a precedence sequence. It should be understood that data used in this way may be interchanged where appropriate, so that the embodiments of the present application described here may be implemented according to sequences other than those illustrated or described here. In addition, terms "including" and "having" and any variations thereof are intended to cover but not exclusively contain, for example, a process, method, system, product or device containing a series of steps or units is not necessarily limited to those steps or units expressly listed, but may include other steps or units not expressly listed or inherent to these processes, methods, products or devices.

According to an aspect of an embodiment of the present application, a torque distribution method is provided. Optionally, in this embodiment, the above torque distribution method may be applied to a hardware environment composed of a terminal and a server. The server is connected with the terminal through a network, may be used to provide services (such as a data storage service, and a data analysis service) for the terminal or clients installed on the terminal, and may set a database on the server or independently of the server to provide the data storage service for the server.

The network above may include, but is not limited to, at least one of the following: a wired network or a wireless network. The wired network above may include, but is not limited to, at least one of the following: a wide area network, a metropolitan area network, or a local area network. The wireless network above may include, but is not limited to, at least one of the following: wireless fidelity (WIFI), or Bluetooth. The terminal may be, but is not limited to, a PC, a mobile phone, a tablet computer, etc.

The torque distribution method of the embodiment of the present application may be executed by the server, the terminal, or jointly executed by the server and the terminal. The execution of the torque distribution method of the embodiment of the present application by the terminal may also be executed by the client installed on it.

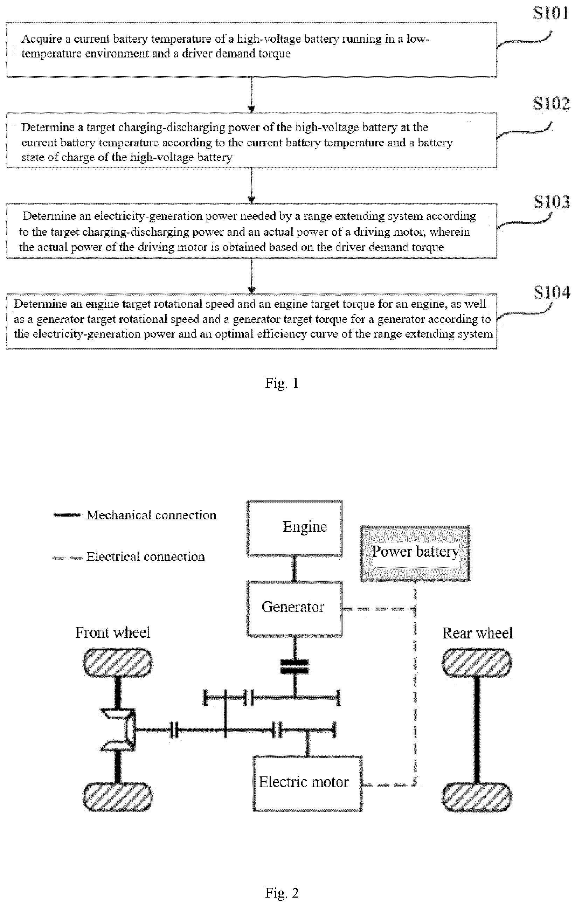

Taking the torque distribution method in this embodiment executed by the terminal as an example, Fig. 1 is a schematic flow diagram of a torque distribution method provided by an embodiment of the present application, applied to a series-parallel hybrid power system as shown in Fig. 2, and including the following steps:
step S101, a current battery temperature of a high-voltage battery running in a low-temperature environment and a driver demand torque are acquired.

As an optional embodiment, as described in the aforementioned torque distribution method, before step S101 of acquiring the current battery temperature of the high-voltage battery running in the low-temperature environment and the driver demand torque, the method further includes:
if a current environment temperature is lower than or equal to a lower temperature limit indicated by battery information of the high-voltage battery, it is determined that the high-voltage battery is running in the low-temperature environment, and a jumping operation for jumping to the step of acquiring the current battery temperature of the high-voltage battery running in the low-temperature environment and the driver demand torque is executed.

For example, a battery type and/or a battery brand of the high-voltage battery may be determined, and battery information (i.e., the battery information may include, but is not limited to: the battery type, the battery brand, a temperature range (i.e., an optimal running temperature range, such as -25°C to 40°C, and -20°C to 45°C,)) corresponding to the high-voltage battery may be determined.

Then, after determining that the vehicle runs in the low-temperature environment, the current battery temperature of the high-voltage battery and the driver demand torque may be determined. The current battery temperature may be detected by a temperature sensor that detects the temperature of the high-voltage battery, and the driver demand torque may be acquired by acquiring relevant data on a driver stepping on an accelerator.

According to the above technical means, whether the high-voltage battery runs in the low-temperature environment can be judged timely and accurately, then the high-voltage battery may enter into a low-temperature running mode timely, and continuous running of the engine and the high-voltage battery in this mode is ensured.

Step S102, a target charging-discharging power of the high-voltage battery at the current battery temperature is determined according to the current battery temperature and a battery state of charge of the high-voltage battery.

In general, each battery has a corresponding battery state of charge, so the battery state of charge of the high-voltage battery may be determined in real-time or in advance.

After determining the current battery temperature and the battery state of charge of the high-voltage battery, the target charging-discharging power of the high-voltage battery at the current battery temperature may be determined based on a first relationship between the battery temperature and the battery charging-discharging power, as well as a second relationship between the battery state of charge and the battery charging-discharging power. For example, the first relationship is a proportional relationship, and the second relationship is also a proportional relationship.

The target charging-discharging power may be an expected charging-discharging power of the high-voltage battery.

Step S103, an electricity-generation power needed by a range extending system is determined according to the target charging-discharging power and an actual power of a driving motor, wherein the actual power of the driving motor is obtained based on the driver demand torque.

After determining the driver demand torque, the actual needed power of the driving motor may be determined according to the driver demand torque.

Therefore, the electricity-generation power needed by the range extending system may be determined according to the target charging-discharging power and the actual power of the driving motor.

The range extending system installs an internal combustion engine range extender on the vehicle, but this internal combustion engine does not directly participate in driving the vehicle, but is only responsible for generating electricity for the vehicle. The electricity generated by it is not only responsible for directly supplying power to the driving motor, but also for charging the battery. When the battery is relatively full, the internal combustion engine may stop working, and the battery may directly push the motor, to promote the vehicle to move forward.

Step S104, an engine target rotational speed and an engine target torque of an engine, as well as a generator target rotational speed and a generator target torque of a generator are determined according to the electricity-generation power and an optimal efficiency curve of the range extending system.

The range extending systems of different vehicles have corresponding optimal efficiency curves. The optimal efficiency curve of the range extending system is to take lowest fuel consumption points on an equal power curve of the range extending system, connect these lowest fuel consumption points, and determine an optimal working route based on final result analysis.

After determining the electricity-generation power and the optimal efficiency curve of the range extending system of this vehicle, the engine target rotational speed and the engine target torque of the engine, as well as the generator target rotational speed and the generator target torque of the generator may be determined by analyzing based on the electricity-generation power and the optimal efficiency curve of the range extending system.

According to the above technical means, since the target charging-discharging power is obtained according to the battery state of charge of the high-voltage battery and the current battery temperature, the impact on the battery charging-discharging power in the low-temperature environment may be effectively considered, the electricity-generation power needed by the range extending system is determined according to the target charging-discharging power and the actual power of the driving motor, so that the electricity-generation power can also be adjusted follow the temperature, and the battery does not need to work near the power limit for a long time, thereby effectively improving the safety of the high-voltage battery; in addition, the actual power of the driving motor is obtained based on the driver demand torque, thus, the electricity-generation power may be obtained after responding to the driver demand, thereby improving the drivability; and finally, the above technical means further determine the engine target rotational speed and the engine target torque for the engine, as well as the generator target rotational speed and the generator target torque for the generator according to the electricity-generation power and the optimal efficiency curve of the range extending system, therefore, even in the low-temperature environment, the engine torque can also be remained accurate, thereby further ensuring the accuracy of a charging power as an optional embodiment.

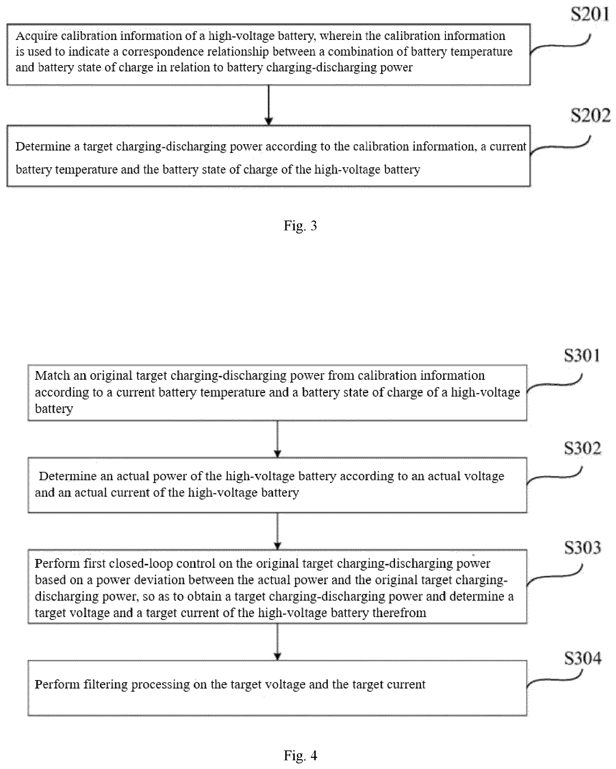

As shown in Fig. 3, as an optional embodiment, as described in the aforementioned torque distribution method, step S102 of determining the target charging-discharging power of the high-voltage battery according to the current battery temperature and the battery state of charge of the high-voltage battery includes the following steps:
step S201, calibration information of the high-voltage battery is acquired, wherein the calibration information is used to indicate a correspondence relationship between a combination of battery temperature and battery state of charge in relation to battery charging-discharging power; and
step S202, the target charging-discharging power is determined according to the calibration information, the current battery temperature, and the battery state of charge of the high-voltage battery.

Optionally, the calibration information of the high-voltage battery may be obtained by analyzing other batteries of the same type of the high-voltage battery, so as to determine the correspondence relationship between the combination of battery temperature and battery state of charge of the high-voltage battery in relation to battery charging-discharging power, and the correspondence relationship may be characterized through graphs, tables, functions, and other modes.

After determining the calibration information, the target charging-discharging power may be finally obtained by matching from the calibration information according to the current battery temperature and the battery and electric quantity of the high-voltage battery.

According to the above technical means, by acquiring the calibration information of the high-voltage battery and then determining the target charging-discharging power, the efficiency of determining the target charging-discharging power can be effectively improved.

As shown in Fig. 4, as an optional embodiment, as described in the aforementioned torque distribution method, step S202 of determining the target charging-discharging power according to the calibration information, the current battery temperature, and the battery state of charge of the high-voltage battery includes the following steps:
step S301, an original target charging-discharging power is matched from the calibration information according to the current battery temperature and the battery state of charge of the high-voltage battery;
step S302, an actual power of the high-voltage battery is determined according to an actual voltage and an actual current of the high-voltage battery;
step S303, first closed-loop control is performed on the original target charging-discharging power based on a power deviation between the actual power and the original target charging-discharging power, so as to obtain the target charging-discharging power and determine a target voltage and a target current of the high-voltage battery therefrom; and
step S304, filtering processing is performed on the target voltage and the target current.

Optionally, the original target charging-discharging power (P_{Tar}) of the battery may be determined according to the battery state of charge (SOC_{HV}) and the current battery temperature (T_{Batt}); the actual power of the high-voltage battery is calculated according to the actual voltage U_{HV} and actual current I_{HV} of the high-voltage battery; P_{HV}=U_{HV}×I_{HV}, and closed-loop control is performed on the target charging-discharging power of the battery according to the power; and the filtering processing (i.e., filtering processing is performed on the target voltage and the target current) is performed on the target charging-discharging power of the battery calculated through the above method to ensure the stability of the power system.

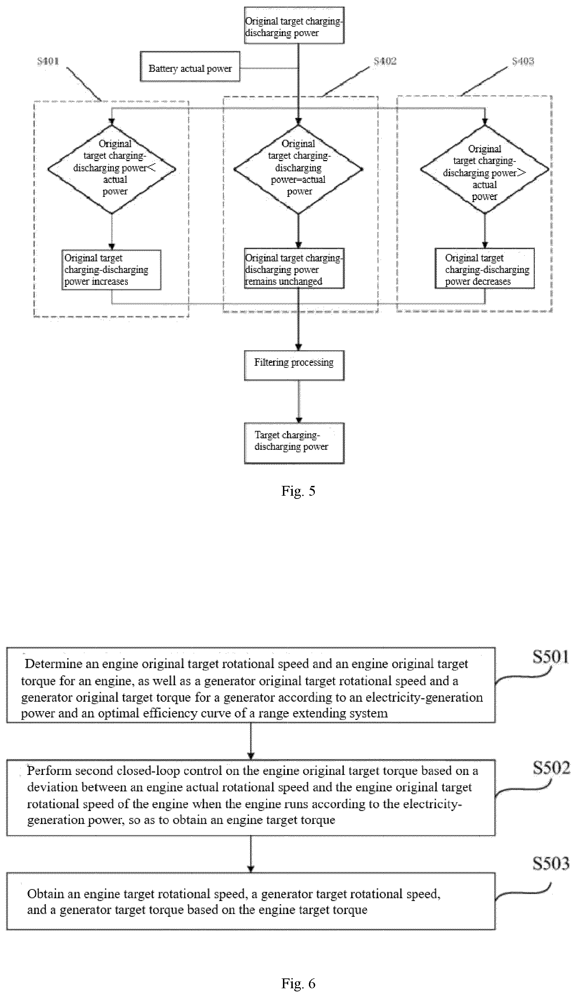

As shown in Fig. 5, as an optional embodiment, as described in the aforementioned torque distribution method, step S303 of performing the first closed-loop control on the target charging-discharging power based on the power deviation between the actual power and the target charging-discharging power, so as to obtain the target charging-discharging power includes the following steps:
step S401, if the power deviation indicates that the original target charging-discharging power is less than the actual power, the original target charging-discharging power is increased to obtain the target charging-discharging power;
step S402, the original target charging-discharging power is taken as the target charging-discharging power if the power deviation indicates that the original target charging-discharging power is equal to the actual power; and
step S403, if the power deviation indicates that the original target charging-discharging power is greater than the actual power, the original target charging-discharging power is decreased to obtain the target charging-discharging power.

According to the technical means recorded in step S401 to step S403, the original target charging-discharging power can be adjusted in different situations to obtain the target charging-discharging power that is closest to the actual power.

According to the above technical means, by performing the first closed-loop control on the original target charging-discharging power based on the power deviation between the actual power and the original target charging-discharging power, so as to obtain the target charging-discharging power, stability and reliability of the charging and discharging of the high-voltage battery can be effectively ensured, and by performing the filtering processing on the target voltage and the target current, the stability of a power system powered by the high-voltage battery can further be ensured as an optional embodiment.

As shown in Fig. 6, as an optional embodiment, as described in the aforementioned torque distribution method, step S104 of determining the engine target rotational speed and the engine target torque for the engine, as well as the generator target rotational speed and the generator target torque for the generator according to the electricity-generation power and the optimal efficiency curve of the range extending system includes the following steps:
step S501, an engine original target rotational speed and an engine original target torque of the engine, as well as a generator original target rotational speed and a generator original target torque of the generator are determined according to the electricity-generation power and the optimal efficiency curve of the range extending system.

That is to say, the engine original target rotational speed and the engine original target torque of the engine, as well as the generator original target rotational speed and the generator original target torque of the generator, which may be further adjusted, are determined according to the electricity-generation power and the optimal efficiency curve of the range extending system.

Step S502, when the engine runs according to the electricity-generation power, second closed-loop control is performed on the engine original target torque based on a deviation between an engine actual rotational speed and the engine original target rotational speed of the engine, so as to obtain the engine target torque.

This method can relieve the impact of acquiring system fluctuation information, energy transfer efficiency, and system error information on the electricity-generation power. The system fluctuation information may be fluctuation information caused by external vibrations and air conditioning on/off.

The energy transfer efficiency may be used to indicate a proportion of losses that occur in an energy transfer process.

The system error information may include, but is not limited to: errors that exist in an energy transfer process or a power monitoring process.

That is to say, by performing the second closed-loop control on the engine original target torque based on the deviation between the engine actual rotational speed and the engine original target rotational speed of the engine, so as to obtain the engine target torque, the requirement of the engine to run according to the electricity-generation power can still be met in the presence of the system fluctuation information, the energy transfer efficiency, and the system error information.

Step S503, the engine target rotational speed, the generator target rotational speed, and the generator target torque are obtained based on the engine target torque.

After acquiring the system fluctuation information, the energy transfer efficiency, and the system error information, closed-loop control may be performed on the target torque of the engine according to the engine actual rotational speed of the engine, thereby further ensuring the safety of the high-voltage battery and the stability of the system.

The engine original target rotational speed may be the target torque of the engine determined before performing the second closed-loop control on the engine original target torque.

After determining the engine target torque, since the engine torque is respectively related to the engine rotational speed, the generator rotational speed and the generator torque, the engine target rotational speed, the generator target rotational speed and the generator target torque may be determined based on the engine target torque.

According to the above technical means, in combination with the system fluctuation information, the energy transfer efficiency and the system error information, the accuracy of the engine torque can be effectively improved, and then a charging power deviation caused by an inaccurate engine torque can further be avoided.

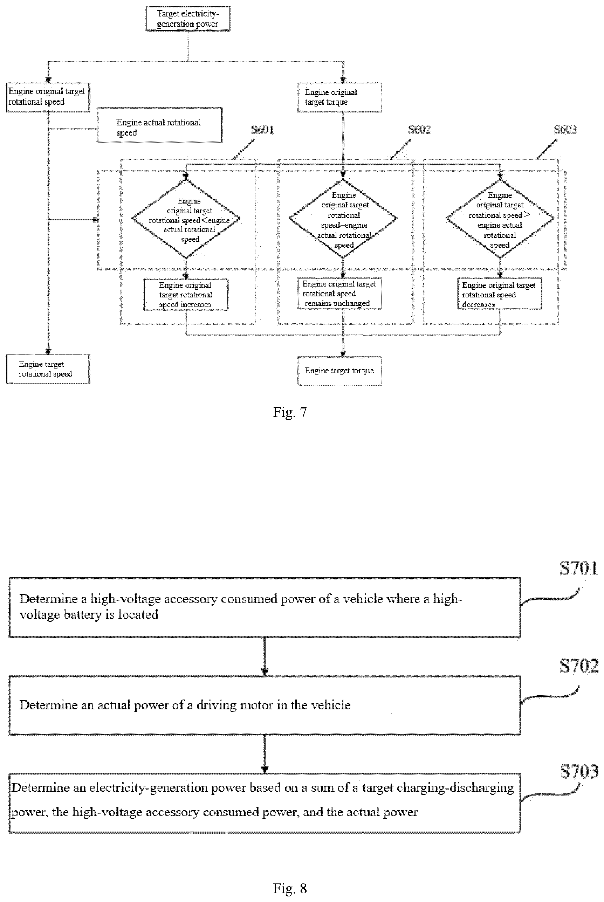

As shown in Fig. 7, as an optional embodiment, as described in the aforementioned torque distribution method, step S502 of performing the second closed-loop control on the engine original target torque based on the deviation between the engine actual rotational speed and the engine original target rotational speed of the engine when the engine runs according to the electricity-generation power, so as to obtain the engine target torque includes the following steps:
step S601, if the engine original target rotational speed is indicated to be less than the engine actual rotational speed, the engine original target torque is increased so as to obtain the engine target torque;
step S602, the engine original target torque is taken as the engine target torque if the engine original target rotational speed is indicated to be equal to the engine actual rotational speed; and
step S603, if the engine original target rotational speed is indicated to be greater than the engine actual rotational speed, the engine original target torque is decreased so as to obtain the engine target torque.

Optionally, the engine target rotational speed may further be determined according to the above method, that is, the engine actual rotational speed may be obtained by adjusting according to the engine original target rotational speed.

If the latest engine target rotational speed is the same as the engine actual rotational speed or meets a preset error, the engine target rotational speed will no longer be adjusted. On the contrary, the engine target torque is taken as the engine original target torque, the engine target rotational speed is taken as the engine original target rotational speed, and adjusting is performed again according to the methods recorded in steps S601 to S603 above.

In this embodiment, the engine actual rotational speed is directly proportional to the generator actual rotational speed.

According to the above technical means, the engine original target torque can be adjusted in different situations so as to obtain the engine target torque that can meet the generator target rotational speed running at the target electricity-generation power.

As shown in Fig. 8, as an optional embodiment, as described in the aforementioned torque distribution method, step S103 of determining the electricity-generation power needed by the range extending system according to the target charging-discharging power and the actual power of the driving motor includes the following steps:
step S701, a high-voltage accessory consumed power of a vehicle where the high-voltage battery is located is determined.

The high-voltage accessory consumed power may include, but is not limited to: a consumed power of an air conditioner, a consumed power of an audio-visual device, and so on. Optionally, it may be determined in real time based on a running state of high-voltage accessories.

Step S702, the actual power of the driving motor in the vehicle is determined.

As an optional embodiment, as described in the aforementioned torque distribution method, determining the actual power of the driving motor in the vehicle includes: a value of the driver demand torque is assigned to a driving torque demand of the driving motor; the driving torque demand is sent to a dual-motor controller; and the driving motor is controlled by the dual-motor controller and the actual power of the driving motor is determined. According to the above technical means, the dual-motor controller can be controlled according to the driver demand torque, so as to respond to the driver demand timely.

Step S703, the electricity-generation power is determined based on a sum of the target charging-discharging power, the high-voltage accessory consumed power, and the actual power.

After determining the target charging-discharging power, the high-voltage accessory consumed power and the actual power of the driving motor, the sum of adding the above target charging-discharging power, the high-voltage accessory consumed power, and the actual power may be determined as the needed electricity-generation power.

According to the above technical means, by determining the electricity-generation power based on the sum of the target charging-discharging power, the high-voltage accessory consumed power, and the actual power, the safety of the high-voltage battery and the stability of the system can further be ensured as an optional embodiment.

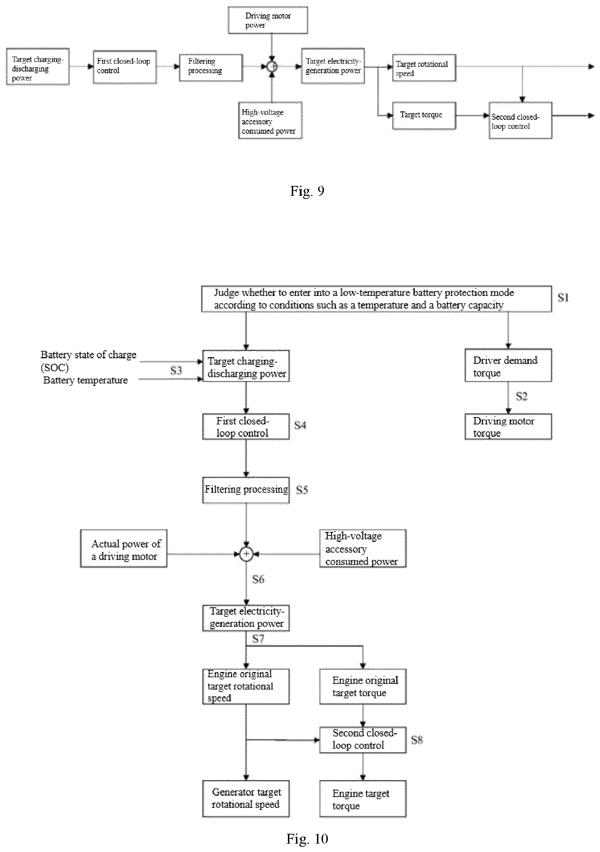

As shown in Fig. 9 and Fig. 10, an application embodiment for applying any of the aforementioned embodiments is provided:
S1, whether to enter into a low-temperature battery protection mode is judged according to conditions such as a temperature and a battery capacity (i.e., judge whether a current environment temperature is lower than or equal to a lower temperature limit indicated by battery information of a high-voltage battery), and continuous operation of an engine is ensured in this mode;
S2, a driving torque demand Tq_{Drv} of a driving motor is determined according to a driver demand torque Tq_{Mot}, and the driving torque demand Tq_{Mot} is taken as a target torque to be sent to a dual-motor controller;
S3, a target charging-discharging power (P_{Tar}) of a battery is determined according to a battery state of charge (SOC_{HV}) and a battery temperature (T_{Batt});
S4, an actual power P_{HV}=U_{HV}×I_{HV} of the high-voltage battery is calculated according to an actual voltage U_{HV} and an actual current I_{HV}, and first closed-loop control is performed on the target charging-discharging power of the battery according to this power;
S5, filtering processing is performed on the target charging-discharging power of the battery obtained by calculating through the above method to ensure the stability of a power system;
S6, an electricity-generation power P_{Eng}=P_{Tar}+P_{NonTrac}+P_{Mot} needed by a range extending system is calculated according to the target charging-discharging power P_{Tar} of the battery, high-voltage accessory consumption P_{NonTrac}, and the actual power P_{Mot} of the driving motor;
S7, based on the electricity-generation power P_{Eng} of the range extending system, target rotational speeds n_{Eng} and n_{Ger}, as well as target torques Tq_{Eng} and Tq_{Ger} of an engine and a generator are determined according to an optimal efficiency curve of the range extending system; and
S8, considering various factors such as system fluctuation, an energy transfer efficiency, and a system error, closed-loop control is performed on the target torque of the engine according to the actual rotational speed of the engine, thereby further ensuring the safety of the high-voltage battery and the stability of the system.

It should be noted that for the sake of simplicity, the aforementioned method embodiments are expressed as a combination of a series of actions. However, those skilled in the art should be aware that the present application is not limited by the order of the described actions, as certain steps may be performed in other orders or simultaneously according to the present application. Secondly, those skilled in the art should also be aware that the embodiments described in the specification are all preferred embodiments, and the actions and modules involved may not necessarily be necessary for the present application.

According to the descriptions in the foregoing implementations, the skilled in the art may clearly learn that the method according to the above embodiment may be implemented by relying on software and a general hardware platform or by using hardware. However, in many cases, the former is the better implementation. Based on such an understanding, the technical solutions of the present application essentially, or the part contributing to the prior art, may be presented in a form of a software product. The computer software product is stored in a storage medium (such as a read-only memory (ROM)/random access memory (RAM), a magnetic disk, or an optical disc) including several instructions to enable one terminal device (which may be a mobile phone, a computer, a server, a network device, or the like) to execute the methods described in all the embodiments of the present application.

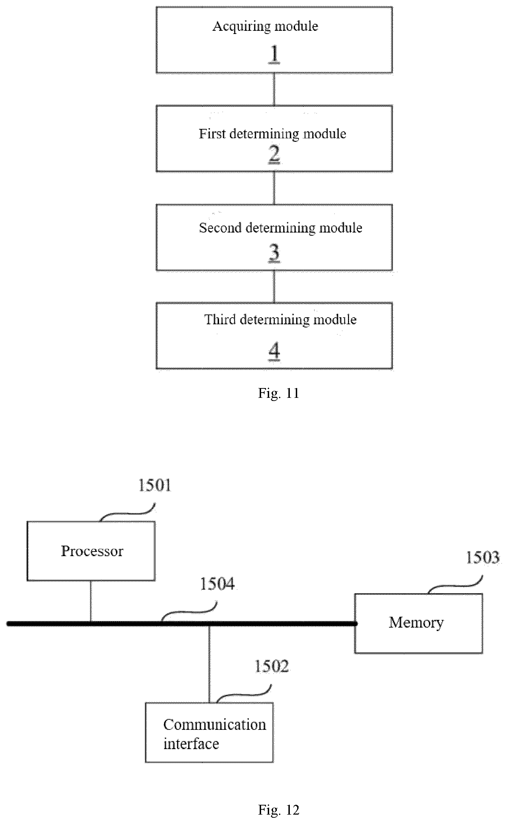

According to another aspect of an embodiment of the present application, a torque distribution apparatus used for implementing the torque distribution method above is further provided. Fig. 11 is a structural block diagram of an optional torque distribution apparatus according to an embodiment of the present application. As shown in Fig. 11, the apparatus may include:
an acquiring module 1, configured to acquire a current battery temperature of a high-voltage battery running in a low-temperature environment and a driver demand torque;
a first determining module 2, configured to determine a target charging-discharging power of the high-voltage battery at the current battery temperature according to the current battery temperature and a battery state of charge of the high-voltage battery;
a second determining module 3, configured to determine an electricity-generation power needed by a range extending system according to the target charging-discharging power and an actual power of a driving motor, wherein the actual power of the driving motor is obtained based on the driver demand torque; and
a third determining module 4, configured to determine an engine target rotational speed and an engine target torque for an engine, as well as a generator target rotational speed and a generator target torque for a generator according to the electricity-generation power and an optimal efficiency curve of the range extending system.

It should be noted that the acquiring module 1 in this embodiment may be used to execute step S101 above, the first determining module 2 in this embodiment may be used to execute step S102 above, the second determining module 3 in this embodiment may be used to execute step S103 above, and the third determining module 4 in this embodiment may be used to execute step S104 above.

The apparatus in this embodiment, in addition to containing the aforementioned modules, may further contain modules for executing any method as described in embodiments of any of the aforementioned torque distribution method.

It should be noted that the examples and application scenarios implemented by the above modules and corresponding steps are the same, but not limited to the content disclosed in the above embodiments. It should be noted that the above modules, as part of the apparatus, may run in a hardware environment implementing the method shown in Fig. 1, and may be implemented through software or hardware. The hardware environment includes a network environment.

According to further another aspect of an embodiment of the present application, an electronic device for implementing the torque distribution method above is further provided. The electronic device may be a server, a terminal, or a combination thereof.

According to another embodiment of the present application, an electronic device is further provided. As shown in Fig. 12, the electronic device may include: a processor 1501, a communication interface 1502, a memory 1503, and a communication bus 1504, wherein the processor 1501, the communication interface 1502, and the memory 1503 carry out mutual communication through the communication bus 1504.

The memory 1503 is configured to store a computer program; and
The processor 1501 is configured to implement, when executing a program stored on the memory 1503, the following steps:
step S101, a current battery temperature of a high-voltage battery running in a low-temperature environment and a driver demand torque are acquired.
step S102, a target charging-discharging power of the high-voltage battery at the current battery temperature is determined according to the current battery temperature and a battery state of charge of the high-voltage battery.
step S103, an electricity-generation power needed by a range extending system is determined according to the target charging-discharging power and an actual power of a driving motor, wherein the actual power of the driving motor is obtained based on the driver demand torque.
step S104, an engine original target rotational speed and an engine original target torque of the engine, as well as a generator original target rotational speed and a generator original target torque of the generator are determined according to the electricity-generation power and the optimal efficiency curve of the range extending system.

Optionally, in this embodiment, the communication bus above may be a peripheral component interconnect (PCI) bus, or an extended industry standard architecture (EISA) bus, and the like. The communication bus may be divided into an address bus, a data bus, a control bus, and the like. For facilitating representation, the bus is only represented with a thick line in the figure, but it does not represent that there is only one bus or one type of buses. The communication interface is used for communication between the electronic device above and other devices.

The memory may include a random access memory (RAM), or a non-volatile memory (NVM), such as at least one disk memory. Optionally, the memory may further be at least one storage apparatus away from the aforementioned processor.

The above processor may be a general-purpose processor, and may include, but is not limited to: a central processing unit (CPU), a network process and the like; and may further be a digital signal processor (DSP), an application specific integrated circuit (ASIC), a field-programmable gate array (FPGA) or other programmable logic devices, discrete gate or transistor logic devices, and discrete hardware components.

An embodiment of the present application further provides a computer readable storage medium, and the storage medium includes a stored program, wherein the program, when executed, performs the method steps of the above method embodiment.

Optionally, in this embodiment, the storage medium above may include, but is not limited to: various media that may store program codes, such as a USB flash disk, a ROM, a RAM, a mobile hard disk drive, a magnetic disk, or an optical disk.

The above serial numbers of the embodiment of the present application are only for description and do not represent the advantages and disadvantages of the embodiments.

The integrated unit in the above embodiments, if implemented in a form of a software functional unit and sold or used as an independent product, may be stored in a computer readable storage medium. Based on such understanding, the technical solutions of the present application essentially, or parts contributing to the prior art, or all or part of the technical solutions can be embodied in a software product form. The computer software product is stored in a storage medium, including a plurality of instructions used to cause one or more computer devices (may be a personal computer, a server, a network device, etc.) to execute all or part of the steps of the methods in all the embodiments of the present application.

In the above embodiments of the present application, the descriptions of each embodiment have their own emphasis. For parts not detailed in one embodiment, please refer to the relevant descriptions of other embodiments.

In several embodiments provided in the present application, it should be understood that the disclosed client may be implemented in other ways. The apparatus embodiment described above is only illustrative. For example, dividing of units is only a kind of logical function dividing, and there may be other dividing modes in actual implementation. For example, the plurality of units or components can be combined or integrated into another system, or some features can be ignored or not executed. On the other hand, the mutual coupling or direct coupling or communication connection shown or discussed may be indirect coupling or communication connection through some interfaces, units or modules, and may be electrical or other forms.

The units described as separate parts may or may not be physically separated, and the parts displayed as units may or may not be physical units, that is, they may be located in one place or distributed onto a plurality of network units. Part or all of the units can be selected according to actual needs to implement the objective of the solution provided in this embodiment.

In addition, each functional unit in each embodiment of the present application may be integrated into one processing unit, or each unit may exist physically alone, or two or more units may be integrated into one unit. The above integrated unit may be implemented in a form of hardware, or may be implemented in a form of software functional units.

The above mentioned is only the preferred implementation of the present application. It should be noted that those skilled in the art should further make various improvements and embellishments without departing from the principle of the present application, and these improvements and embellishments should also be regarded as the protection scope of the present application.

## Claims

1. A torque distribution method, comprising:
acquiring a current battery temperature of a high-voltage battery running in a low-temperature environment and a driver demand torque;
determining a target charging-discharging power of the high-voltage battery at the current battery temperature according to the current battery temperature and a battery state of charge of the high-voltage battery;
determining an electricity-generation power needed by a range extending system according to the target charging-discharging power and an actual power of a driving motor, wherein the actual power of the driving motor is obtained based on the driver demand torque; and
determining an engine target rotational speed and an engine target torque for an engine, as well as a generator target rotational speed and a generator target torque for a generator according to the electricity-generation power and an optimal efficiency curve of the range extending system.

2. The torque distribution method according to claim 1, wherein the step of determining the target charging-discharging power of the high-voltage battery according to the current battery temperature and the battery state of charge of the high-voltage battery comprises:
acquiring calibration information of the high-voltage battery, wherein the calibration information is used to indicate a correspondence relationship between a combination of battery temperature and battery state of charge in relation to battery charging-discharging power; and
determining the target charging-discharging power according to the calibration information, the current battery temperature, and the battery state of charge of the high-voltage battery.

3. The torque distribution method according to claim 2, wherein the step of determining the target charging-discharging power according to the calibration information, the current battery temperature, and the battery state of charge of the high-voltage battery comprises:
matching an original target charging-discharging power from the calibration information according to the current battery temperature and the battery state of charge of the high-voltage battery;
determining an actual power of the high-voltage battery according to an actual voltage and an actual current of the high-voltage battery;
performing first closed-loop control on the original target charging-discharging power based on a power deviation between the actual power and the original target charging-discharging power, so as to obtain the target charging-discharging power and determine a target voltage and a target current of the high-voltage battery therefrom; and
performing filtering processing on the target voltage and the target current.

4. The torque distribution method according to claim 3, wherein the step of performing the first closed-loop control on the target charging-discharging power based on the power deviation between the actual power and the target charging-discharging power, so as to obtain the target charging-discharging power comprises:
increasing an original target charging-discharging power to obtain the target charging-discharging power if the power deviation indicates that the original target charging-discharging power is less than the actual power;
taking the original target charging-discharging power as the target charging-discharging power if the power deviation indicates that the original target charging-discharging power is equal to the actual power; and
decreasing the original target charging-discharging power to obtain the target charging-discharging power if the power deviation indicates that the original target charging-discharging power is greater than the actual power.

5. The torque distribution method according to claim 1, wherein the step of determining the engine target rotational speed and the engine target torque for the engine, as well as the generator target rotational speed and the generator target torque for the generator according to the electricity-generation power and the optimal efficiency curve of the range extending system comprises:
determining an engine original target rotational speed and an engine original target torque of the engine, as well as a generator original target rotational speed and a generator original target torque of the generator according to the electricity-generation power and the optimal efficiency curve of the range extending system;
when the engine runs according to the electricity-generation power, performing second closed-loop control on the engine original target torque based on a deviation between an engine actual rotational speed and the engine original target rotational speed of the engine, so as to obtain the engine target torque; and
obtaining the engine target rotational speed, the generator target rotational speed, and the generator target torque based on the engine target torque.

6. The torque distribution method according to claim 5, wherein the step of performing the second closed-loop control on the engine original target torque based on the deviation between the engine actual rotational speed and the engine original target rotational speed of the engine when the engine runs according to the electricity-generation power, so as to obtain the engine target torque comprises:
increasing the engine original target rotational speed so as to obtain the engine target torque if the engine original target rotational speed is indicated to be less than the engine actual rotational speed;
taking the engine original target rotational speed as the engine target torque if the engine original target rotational speed is indicated to be equal to the engine actual rotational speed; and
decreasing the engine original target rotational speed so as to obtain the engine target torque if the engine original target rotational speed is indicated to be greater than the engine actual rotational speed.

7. The torque distribution method according to claim 1, wherein the step of determining the electricity-generation power needed by the range extending system according to the target charging-discharging power and the actual power of the driving motor comprises:
determining a high-voltage accessory consumed power of a vehicle where the high-voltage battery is located;
determining the actual power of the driving motor in the vehicle; and
determining the electricity-generation power based on a sum of the target charging-discharging power, the high-voltage accessory consumed power, and the actual power.

8. The torque distribution method according to claim 1, wherein, before the step of acquiring the current battery temperature of the high-voltage battery running in a low-temperature environment and the driver demand torque, the method further comprises:
determining that the high-voltage battery is running in a low-temperature environment if a current environment temperature is lower than or equal to a lower temperature limit indicated by battery information of the high-voltage battery, and executing a jumping operation for jumping to the step of acquiring the current battery temperature of the high-voltage battery running in the low-temperature environment and the driver demand torque.

9. The torque distribution method according to claim 7, wherein the step of determining the actual power of the driving motor in the vehicle comprises:
assigning a value of the driver demand torque to a driving torque demand of the driving motor;
sending the driving torque demand to a dual-motor controller; and
controlling the driving motor by the dual-motor controller and determining the actual power of the driving motor.

10. A torque distribution apparatus, comprising:
an acquiring module, configured to acquire a current battery temperature of a high-voltage battery running in a low-temperature environment and a driver demand torque;
a first determining module, configured to determine a target charging-discharging power of the high-voltage battery at the current battery temperature according to the current battery temperature and a battery state of charge of the high-voltage battery;
a second determining module, configured to determine an electricity-generation power needed by a range extending system according to the target charging-discharging power and an actual power of a driving motor, wherein the actual power of the driving motor is obtained based on the driver demand torque; and
a third determining module, configured to determine an engine target rotational speed and an engine target torque for an engine, as well as a generator target rotational speed and a generator target torque for a generator according to the electricity-generation power and an optimal efficiency curve of the range extending system.

11. An electronic device, comprising a processor, a communication interface, a memory and a communication bus, wherein the processor, the communication interface and the memory carry out mutual communication through the communication bus, wherein
the memory is configured to store a computer program; and
the processor is configured to execute the computer program stored on the memory to perform steps of the method according to any one of claims 1 to 9.

12. A computer readable storage medium, having a computer program stored thereon, wherein the computer program is configured to, when executed, perform steps of the method according to any one of claims 1 to 9.
